# DEMANDE DE BREVET EUROPEEN

(11) **EP 1 914 406 A1**
(43) Date de publication de la demande: **23.04.2008**
(21) Numéro de dépôt: 07291161.3
(22) Date de dépôt: 27.09.2007
(51) Int. Cl.: F02B 77/11, B60R 13/08, B32B 7/00

(54) **Ecran de protection acoustique et thermique comprenant une métallique micro perforée**

(30) Priorité: 07.11.2006 FR 0609722; 10.10.2006 FR 0608885
(71) Demandeur: Centre d'etude et de recherche pour l'automobile (CERA), 51100 Reims (FR)
(72) Inventeur: Schweitzer, Laurent, 51170 Arcis-Le-Ponsart (FR)
(74) Mandataire: Sayettat, Julien Christian

(57) **Abrégé**

L'invention concerne un écran (1) de protection acoustique et thermique destiné à être monté en regard d'un moteur de véhicule automobile, ledit écran comprenant une coque inférieure (2) et une feuille (3) métallique pourvue de micro perforations (4), ladite feuille étant associée à la face supérieure de ladite coque par l'intermédiaire d'un moyen d'espacement (5), de sorte qu'elle se trouve à distance de ladite coque.

## Description

L'invention concerne un écran de protection acoustique et thermique destiné à être monté en regard d'un moteur de véhicule automobile.

Il est connu de réaliser un écran de protection acoustique et thermique destiné à être monté en regard de, et notamment sous, un moteur de véhicule automobile, ledit écran comprenant une coque inférieure, notamment à base de matière plastique injectée, ledit écran comprenant en outre, associée à la face supérieure de ladite coque, une couche de feutre revêtue d'un film de matière plastique très mince, destiné à la protéger, notamment des fluides.

Du fait de sa minceur, le film laisse les ondes acoustiques pénétrer dans la couche de feutre où elles sont absorbées.

Cependant, un tel écran doit, du fait de la fragilité du film, être tenu à distance des sources chaudes présentes dans le moteur, ce qui amoindrit ses possibilités de protection acoustique en raison de phénomènes de rayonnement.

L'invention a pour but de pallier cet inconvénient en proposant un écran résistant à la chaleur, qui peut être disposé proche des sources chaudes et ainsi apporter une protection acoustique optimisée.

A cet effet, l'invention propose un écran de protection acoustique et thermique destiné à être monté en regard d'un moteur de véhicule automobile, ledit écran comprenant une coque inférieure, ledit écran étant comprenant en outre une feuille métallique pourvue de micro perforations, ladite feuille étant associée à la face supérieure de ladite coque par l'intermédiaire d'un moyen d'espacement, de sorte qu'elle se trouve à distance de ladite coque.

La feuille métallique permet d'assurer la protection attendue vis à vis des fluides, en raison de la faible dimension des perforations. Cependant, les perforations sont agencées pour permettre aux ondes sonores de pénétrer au delà de la feuille pour être atténuées.

Dans cette description, les termes de positionnement dans l'espace (supérieur, inférieur,...) sont pris en référence à un écran disposé sous un moteur. Ces termes sont à adapter dans les cas où l'écran est monté dans une autre configuration.

D'autres particularités et avantages de l'invention apparaîtront dans la description qui suit, faite en référence aux figures jointes dans lesquelles :
- la figure 1 est une représentation schématique en coupe d'un écran selon une première réalisation,
- la figure 2 est une représentation schématique en coupe d'un écran selon une deuxième réalisation,
- la figure 3 est une représentation schématique en coupe d'un écran selon une troisième réalisation.

En référence aux figures, on décrit à présent un écran 1 de protection acoustique et thermique destiné à être monté en regard de, et notamment sous, un moteur de véhicule automobile, ledit écran comprenant une coque 2 inférieure, par exemple à base de polypropylène injecté chargé en fibres de verre, ledit écran comprenant en outre une feuille 3 métallique pourvue de micro perforations 4, ladite feuille étant associée à la face supérieure de ladite coque par l'intermédiaire d'un moyen d'espacement 5, de sorte qu'elle se trouve à distance de ladite coque.

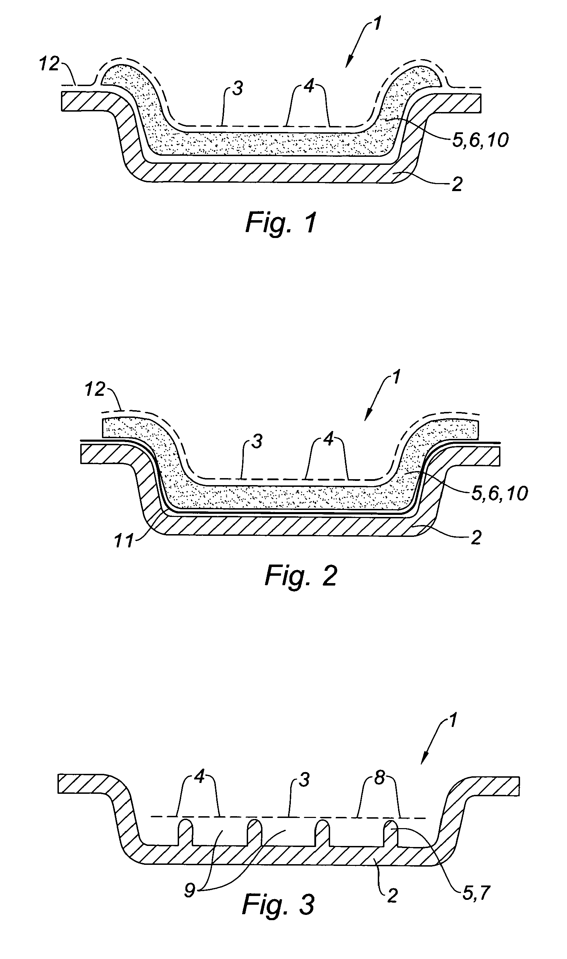

Selon la réalisation des figures 1 et 2, le moyen d'espacement 5 est formé d'une couche 10 de matériau absorbant.

Selon la réalisation de la figure 1, la périphérie 12 de la feuille 3 est associée de façon sensiblement étanche à la coque 2, et ladite coque est sensiblement étanche, de sorte que la couche absorbante 10 soit logée de façon sensiblement étanche entre ladite feuille et ladite coque.

On empêche ainsi une pénétration des fluides dans la couche 10 par sa tranche.

L'association entre la périphérie 12 et la coque 2 peut être faite par tous moyens connus : rivetage, soudure, écrasement à chaud,...

Selon la réalisation de la figure 2, la périphérie 12 de la feuille 3 est associée de façon sensiblement étanche à la périphérie d'une couche étanche 11 disposée contre la coque 2, la couche absorbante 10 étant logée de façon sensiblement étanche dans le logement défini par ladite feuille et ladite couche étanche.

La couche étanche 11 est par exemple formée d'une feuille d'aluminium, non perforée, ladite feuille et la feuille métallique 3 étant associées en leurs périphéries respectives par une compression périphérique de la couche absorbante 10, ladite couche formant joint entre les deux feuilles. Une telle réalisation est possible dans le cas, tel que décrit ci-après, où la couche 10 est à base de feutre de verre lié par une résine.

En variante, la couche étanche peut être sous forme de film thermoplastique, dont la périphérie est soudée à la feuille 3.

Selon une réalisation, le moyen d'espacement 5 est formé d'un feutre 6, notamment de fibres de verre, lié par une résine, notamment thermodurcissable, ledit feutre formant couche absorbante 10.

D'autres matériaux absorbants peuvent être prévus : matelas de fibres (minérales, végétales, synthétiques,...) non liées, mousse,...

Selon une réalisation, la coque 2 est formée par une zone densifiée du feutre 6 sur une portion de son épaisseur. Une telle zone densifiée, présentant par exemple une densité de l'ordre de 0,15, est obtenue par exemple par aiguilletage dans ladite portion d'épaisseur.

Selon une réalisation, la coque 2 est à base de feutre, notamment de fibres de verre, lié par une résine, notamment thermodurcissable. Le feutre est suffisamment densifié, par exemple de sorte à présenter une densité de l'ordre de 0,15, pour présenter une rigidité satisfaisante. La coque 2 peut être thermoformée conjointement avec le feutre 6 formant moyen d'espacement 5.

Il peut être prévu, lorsque la coque 2 est à base de feutre, de la revêtir par un film de protection anti-salissures et anti-gravillonnage, par exemple à base de non tissé.

Le feutre 6 peut présenter une masse surfacique comprise entre 400 et 800 g/m², notamment de l'ordre de 600 g/m².

Selon la réalisation de la figure 3, le moyen d'espacement 5 est formé de nervures 7, qui peuvent être moulées d'une pièce avec la coque 2, issues de la face supérieure de ladite coque, la feuille 3 étant associée au bord libre 8 desdites nervures, de sorte à former des cavités 9 formant résonateurs, les ondes sonores pénétrant dans lesdites cavités par les perforations 4.

Les nervures 7 peuvent présenter une hauteur comprise entre 15 et 20 mm, notamment de l'ordre de 20 mm.

Selon une réalisation, applicable à tous les agencements précédemment décrits, on peut prendre une feuille 3 à base d'aluminium.

Pour présenter une tenue mécanique suffisante, la feuille 3 peut présenter une épaisseur comprise entre 70 et 130 microns, notamment de l'ordre de 100 microns.

La feuille 3 peut présenter typiquement une densité de perforations 4 comprise entre 400 000 et 600 000 trous/m², notamment de l'ordre de 500 000 trous/ m².

En outre, le diamètre des trous est agencé de sorte à empêcher une pénétration des fluides.

Lorsque la coque 2 est réalisée par moulage, l'écran 1 peut comprendre des organes fonctionnels issus de matière de ladite coque, tels que des fixations non représentées.

Selon une réalisation non représentée, la feuille 3 peut présenter un gaufrage, de sorte à optimiser sa raideur.

## Revendications

1. Ecran (1) de protection acoustique et thermique destiné à être monté en regard d'un moteur de véhicule automobile, ledit écran comprenant une coque inférieure (2), ledit écran étant **caractérisé en ce qu'**il comprend en outre une feuille (3) métallique pourvue de micro perforations (4), ladite feuille étant associée à la face supérieure de ladite coque par l'intermédiaire d'un moyen d'espacement (5), de sorte qu'elle se trouve à distance de ladite coque.

2. Ecran selon la revendication 1, le moyen d'espacement (5) étant formé d'une couche (10) de matériau absorbant.

3. Ecran selon la revendication 2, la périphérie (12) de la feuille (3) étant associée de façon sensiblement étanche à la coque (2), et ladite coque étant sensiblement étanche, de sorte que la couche absorbante (10) soit logée de façon sensiblement étanche entre ladite feuille et ladite coque.

4. Ecran selon la revendication 2, la périphérie (12) de la feuille (3) étant associée de façon sensiblement étanche à la périphérie d'une couche étanche (11) disposée contre la coque (2), la couche absorbante (10) étant logée de façon sensiblement étanche dans le logement défini par ladite feuille et ladite couche étanche.

5. Ecran selon l'une quelconque des revendications 2 à 4, le moyen d'espacement (5) étant formé d'un feutre (6) lié par une résine, ledit feutre formant couche absorbante (10).

6. Ecran selon la revendication 5, la coque (2) étant formée par une zone densifiée du feutre (6) sur une portion de son épaisseur.

7. Ecran selon la revendication 5, la coque (2) étant à base de feutre lié par une résine.

8. Ecran selon la revendication 1, le moyen d'espacement (5) étant formé de nervures (7) issues de la face supérieure de la coque (2), la feuille (3) étant associée au bord libre (8) desdites nervures, de sorte à former des cavités (9) formant résonateurs.

9. Ecran selon l'une quelconque des revendications 1 à 8, la feuille (3) présentant une épaisseur comprise entre 70 et 130 microns, notamment de l'ordre de 100 microns.

10. Ecran selon l'une quelconque des revendications 1 à 9, la feuille (3) présentant une densité de perforations (4) comprise entre 400 000 et 600 000 trous/m², notamment de l'ordre de 500 000 trous/ m².
